# EUROPEAN PATENT SPECIFICATION

(11) **EP 1 078 622 B1**
(45) Date of publication and mention of the grant of the patent: **12.05.2004**
(21) Application number: 00202610.2
(22) Date of filing: 20.07.2000
(51) Int. Cl.: A61G 5/04, B60G 3/20, B60G 7/00

(54) **Undercarriage for a vehicle, and wheelchair provided with such undercarriage**
Untergestell für Fahrzeug und Rollstuhl ausgestattet mit solchen Untergestell
Chassis pour véhicule et fauteuil roulant pourvu d'un tel chassis

(30) Priority: 02.08.1999 NL 1012764
(43) Date of publication of application: 28.02.2001
(73) Proprietor: Wheelbase Products B.V., 5705 CG Helmond (NL)
(72) Inventor: van de Beek, Dick Gerardus Johannes, 5709 RG Helmond (NL)
(74) Representative: Prins, Adrianus Willem, Mr. Ir.

(56) References cited:
- WO-A-00/19958
- AU-B- 583 432
- AU-B- 604 321
- NL-A- 9 300 063
- NL-C- 1 002 601
- US-A- 3 525 534
- US-A- 5 772 237
- US-E- R E35 707

## Description

The invention relates to an undercarriage for a vehicle, in particular a wheelchair, comprising only two opposite swivel wheels and two opposite driven wheels, the driven wheels each being connected to a mechanism of such design that an upward or downward movement of one driven wheel relative to the undercarriage frame effects an opposite movement of the other driven wheel.

Such undercarriage is known from practice and can form, together with a seat means mounted thereon, such as a seat, a wheelchair. A less mobile or immobile person can sit down on the vehicle and yet travel relatively fast therewith. Usually, the wheels of the undercarriage are relatively closely spaced, and are attached to a stable frame of the undercarriage, which may, for instance, be made from steel, aluminum or fiber-reinforced plastic. Further, for its travel, the undercarriage usually comprises a drive mechanism in the form of one or more relatively powerful electromotors which, during use, drive said driven wheels.

This known undercarriage has as a drawback that it exhibits an unstable travel performance at a relatively high speed of travel. This may, for instance, be caused in that a driven wheel loses traction when the wheelchair runs over an unevenness of the ground or when the wheelchair moves through a bend. A usually electronic control of the drive of the vehicle cannot properly correct the loss of traction, as a consequence of which the vehicle becomes uncontrollable and can even spin around a vertical axis, in practice referred to as going "into the swing".

Dutch patent 1002601 already discloses an undercarriage of a wheelchair intended to take up unevennesses more effectively. The swivel wheels and driven wheels of this known undercarriage are intercoupled by a compensation mechanism in such a manner that a swivel wheel moves up or down during a downward or upward movement respectively of a driven wheel which is coupled thereto by the mechanism. Moreover, the driven wheels are intercoupled by a leaf spring such that an upwardly or downwardly directed movement of one driven wheel results in an opposite movement of the other wheel. A drawback of this known undercarriage is that the vertical position of the swivel wheels determines the vertical position of the front wheels and vice versa. This may cause a situation where one of the driven wheels, during travel, loses traction in that a swivel wheel moves in vertical direction, for instance when said swivel wheel passes an unevenness of the ground. This results in the above-mentioned drawbacks of a common undercarriage without such compensation mechanism, i.e. the vehicle becoming uncontrollable, so that it may moreover tilt as yet. Because of said coupling of the swivel wheels to the driven wheels, the vehicle may even be more unstable than a vehicle without such compensation mechanism, because the swivel wheel support needed during travel, required for the stability of the undercarriage, may drop when a driven wheel passes an unevenness in the ground. Another drawback of this known undercarriage is its relatively complex, and hence relatively trouble-susceptible and costly construction.

The object of the present invention is to overcome the drawbacks of the known undercarriage while maintaining the advantages thereof, i.e. a relatively simple undercarriage for a vehicle whose driven wheels, at least during use, maintain a good traction and stability on an uneven ground and in a winding path.

To this end, according to the invention, an undercarriage for a vehicle is characterized in that for ensuring the stability and the traction of the vehicle on different types of ground, each swivel wheel is pivotable only around a substantially vertical axis and is otherwise fixedly connected to an undercarriage frame of the undercarriage.

This undercarriage can be constructed in a relatively simple manner and provides a good travel performance, both at relatively low and high speeds. Only the driven wheels can move up or down relative to the undercarriage frame in order to maintain traction during travel over an unevenness and in bends. The non-driven swivel wheels are fixedly connected to the undercarriage frame in vertical direction and support the undercarriage to provide stability during travel, in particular also during travel in bends. When the wheelchair or a like vehicle moves through a bend, it is inclined to heel over to the outside bend, due to the relatively high center of gravity and the centrifugal force. This heeling over is prevented by the swivel wheels that are fixed in vertical direction. Moreover, the pressure exerted on the two driven wheels by the wheelchair remains substantially equal, due to the presence of the mechanism. Thus, both driven wheels maintain traction in sharper or faster-made bends than used to be possible up to now.

It is observed that Dutch paten publication NL A 9300063 teaches a wheelchair comprising a coupling device between the swivel wheels and driven wheels for providing an improved travel performance, in particular at a relatively high speed of travel. This coupling device couples the swivel wheels and the driven wheels together in such a manner, that when one wheel makes a movement in vertical direction, for instance when passing an unevenness, the other three wheels move in the same vertical direction. As a consequence, traction may be lost, which results in the drawbacks already mentioned hereinabove.

In accordance with a preferred embodiment, the mechanism comprises at least a coupling rod which is at least centrally connected to the undercarriage frame such that the coupling rod is pivotable in a vertical plane relative to the undercarriage frame, the coupling rod being arranged for converting a vertically directed movement of one driven wheel into the opposite movement of the other driven wheel.

The coupling rod transmits a vertical movement, relative to the frame, of one driven wheel to the other driven wheel, causing that other wheel to move in an opposite vertical direction, and vice versa. This is a very simple, relatively inexpensive embodiment of the mechanism mentioned.

Preferably, the undercarriage frame comprises an at least partially open section arranged for enclosing at least a part of the coupling rod such that the coupling rod can perform a pivotal movement in said vertical plane.

Thus, the coupling rod can be located in an inner space of said section, which is at least partially guarded from the outside. Hence, a movement of the coupling rod can take place invisibly to a user. Moreover, the coupling rod can be guarded against fouling, coming from an environment, which could accumulate between the coupling rod and the undercarriage frame, which adds to the safety of using the undercarriage.

In accordance with a further elaboration of the invention, between each driven wheel and the coupling rod, there extends a connecting element arranged for keeping a rotation axis of the wheel at a vertical distance from the coupling rod.

These connecting elements can, for instance, be used when the coupling rod should be connected to the undercarriage frame at a different height than the rotation axes of the driven wheels. Further, the connecting elements can be connected to or at least adjacent ends of the coupling rod.

Preferably, each connecting element is pivotally connected to the coupling rod, each connecting element having a part remote from the coupling rod pivotally coupled to the undercarriage frame by a swivel arm pivotable in a vertical plane, which swivel arm has its first end pivotally connected to the connecting element and its second end pivotally connected to the undercarriage frame.

This mechanism provides that the driven wheels do not tilt from a substantially vertical position when the coupling rod makes a pivotal movement relative to the undercarriage frame. As a result, the axes of rotation of these wheels always extend in a horizontal direction, which increases the stability of the undercarriage during the use thereof.

In accordance with an advantageous elaboration of the invention, each swivel arm has its second end pivotally connected to a part of the undercarriage remote from the driven wheels.

Thus, the swivel arms can each have sufficient length, so that the arms can swivel sufficiently during a pivotal movement of the coupling rod relative to the undercarriage frame.

In accordance with an additionally advantageous elaboration, for each driven wheel, a drive is attached to the mechanism. Preferably, each swivel arm mounts a drive for a driven wheel.

Thus, each drive can move along with the wheel driven thereby, at least in a vertical direction relative to the undercarriage frame, which renders a relatively complicated transmission between the drive and the wheel superfluous.

In accordance with a further elaboration, the undercarriage comprises spring and damping means arranged for damping vertical movements of the driven wheels relative to the undercarriage frame.

The spring and damping means provide a relatively comfortable travel performance of the undercarriage and can, for instance, damp shocks. Preferably, the spring and damping means are arranged for damping a pivotal movement of the coupling rod, so that the coupling rod can be moved by the spring and damping means to a starting position at which the axes of rotation of the driven wheels are at the same level. Further, the connecting elements can comprise the spring and damping means, which are designed as hydraulic or pneumatic spring dampers.

In accordance with an advantageous elaboration, the spring forces exerted by the spring and damping means are settable for enabling compensating differences in load on the undercarriage.

Thus, the springing of the undercarriage can be adjusted as desired to the weight of the user of a vehicle provided with the undercarriage. Moreover, the adjusting of the spring forces exerted by the spring and damping means may be desirable when the user wishes more rigid or slacker springing relative to the set spring forces of the spring and damping means, for instance in order to effect a different travel performance or a more comfortable road stability.

In accordance with a further elaboration of the invention, the undercarriage frame comprises swivel wheel arms which retain the swivel wheels such that each swivel wheel is pivotable only around a substantially vertical axis.

The swivel wheel arms can keep the swivel wheels at a horizontal distance from the undercarriage frame to provide a greater stability, at least during use of the undercarriage.

The present invention also relates to a wheelchair comprising an undercarriage provided by the invention.

Such wheelchair has a very comfortable travel performance, due to the good traction of the driven wheels of the undercarriage, in combination with the good stability supplied by the swivel wheels which are pivotable only around a vertical axis and are otherwise fixedly connected to an undercarriage frame of the undercarriage.

In accordance with an advantageous elaboration of the invention, the wheelchair comprises a seat mounted on the undercarriage, the seat being mounted on the undercarriage such that the driven wheels are the front wheels and the swivel wheels are the rear wheels.

A wheelchair whose rear wheels are the swivel wheels is particularly maneuverable, such that it can rotate about its own vertical axis, which is of great importance particularly in shops. However, by its nature, such embodiment lacks directional stability. This directional stability is obtained through the controlled drive of the independently drivable wheels. For the proper functioning thereof, it is of great importance that the driven wheels maintain their grip of the ground. This is precisely effected with the undercarriage according to the invention. As a result, the wheelchair can also be moved at greater speed. The very combination of great maneuverability and great speed renders the wheelchair suitable for indoor as well as outdoor use, so that the user needs to have only one wheelchair and does not have to change wheelchairs.

It should be noted that WO00/19958, which is a document pursuant art 54(3) EPC, describes a wheelchair undercarriage having four swivel wheels, i.e. on each corner of the frame one swivel wheel. In fact, the stable support for the under carriage is provided by these four swivel wheels. The application further describes two driven wheels which are positioned between the four swivel wheels. These driven wheels are connected to a mechanism of such design that an upward or downward movement of one driven wheel relative to the undercarriage frame effects an opposite movement of the other driven wheel.

Hereinafter, the invention will be described in more detail with reference to an exemplary embodiment and the accompanying drawing. In this drawing:
Fig. 1 is a perspective view of an undercarriage wherein the coupling rod is in a starting position;
Fig. 2 is a view similar to Fig. 1, wherein the coupling rod has rotated relative to a frame of the undercarriage;
Fig. 3 is a simplified representation of a wheelchair according to the prior art, located on a flat ground;
Fig. 4 is a representation similar to Fig. 3, wherein on driven wheel is located on an obstacle;
Fig. 5 is a simplified representation of a wheelchair having an undercarriage according to the invention, located on a flat ground; and
Fig. 6 is a representation similar to Fig. 5, wherein one of the driven wheels is located on an obstacle.

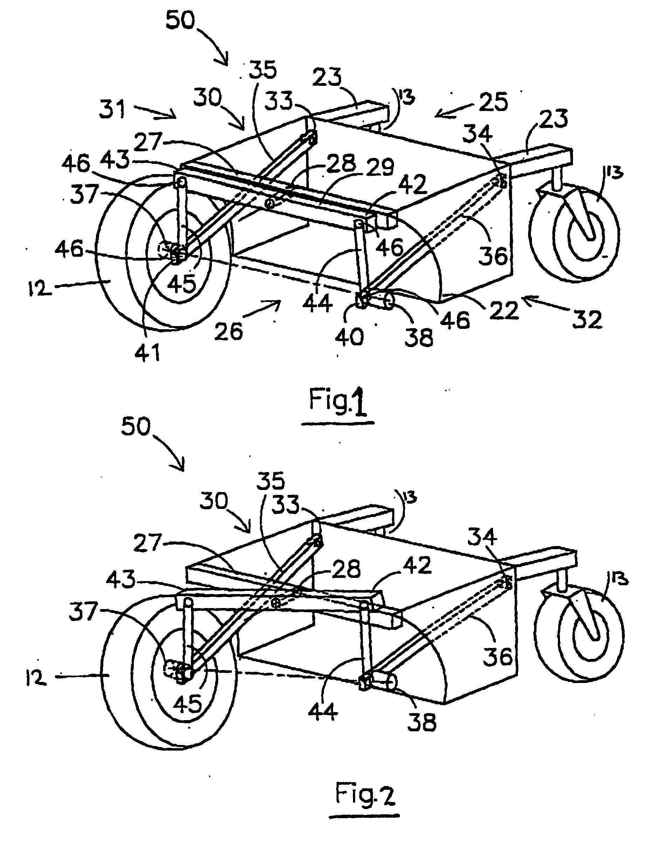

Figs. 1 and 2 show an undercarriage 50 for an electrically driven wheelchair, comprising two opposite swivel wheels 13 and two opposite driven wheels 12. A drive for these driven wheels 12 is not shown, and may, for instance, comprise an electromotor for each wheel 12. Such motors are directly provided with a shaft for mounting the wheel 12. Parts such as a control, batteries, spring and damping means and the like, are not shown either, for the sake of clarity of the drawing. Typically, such control can operate the driven wheels 12 very accurately and is usually adapted to cause these wheels 12 to move independently of each other, so that the control mechanism can control the undercarriage during travel. This control mechanism may, for instance, comprise electronics which, in use, measure at short intervals the resistance undergone by each driven wheel 12, and adjusts the supplied power thereto.

The undercarriage 50 comprises a container 22 made of, for instance, sheet steel, on one side 25 provided with two horizontally extending arms 23 mounting the swivel wheels 13. Due to these arms 23, the swivel wheels 13 can provide a relatively great stability to the undercarriage 50, at least during use. In this exemplary embodiment, the opposite side 26 of the container 22 is largely open, and hence suitable for, for instance, loading and unloading batteries. Located at the top of side 26 of the container 22 is a tube 27 which is relatively firm and can be made of, for instance, steel. With this tube 27, the construction shown forms a relatively strong undercarriage frame 30. A coupling rod 29, which is likewise relatively firm and can likewise be made of steel, is at least centrally connected to the tube 27 by a pivotal axis 28, so that the coupling rod 29 is pivotable in a vertical plane relative to the undercarriage frame 30. The undercarriage 50 may comprise spring and damping means arranged for damping a pivotal movement of the coupling rod 29 relative to the tube 27. These spring and damping means may, for instance, be arranged around the axis 28 or somewhere between the frame 30 and the coupling rod 29. Further, the tube 27 can comprise an at least partially open section designed to enclose at least a part of the coupling rod 29, while the coupling rod 29 can make a pivotal movement in said vertical plane. This protects the coupling rod 29 against fouling and increases the safety during use of the undercarriage 50.

Mounted on sides 31 and 32 of the container 22, at right angles thereto, are swivel points 33 and 34, whose axes of rotation extend in a substantially horizontal direction. On the inside of the frame 30, a swivel arm 35, 36 is pivotally connected to each of these swivel points 33, 34 respectively. Each swivel arm 35, 36 has a dimension such that it projects from the largely open side 26 of the container 22. On these arms, provisions can be made for mounting said drive for the driven wheels 12, such as electromotors. For that purpose, the arms can be provided with associated receiving points 37 and 38 for the driven wheels 12.

Between the ends 40 and 41 of the swivel arms 35 and 36 respectively, and the ends 42 and 43 of the coupling rod 29, connecting rods 44 and 45 respectively are provided. Each connecting rod 44, 45 is pivotally connected to the coupling rod 29, and pivotally coupled to the swivel arm 35, 36. The connecting rods 44, 45 can be of rigid design, or comprise spring and damping means arranged for springing and damping the driven wheels 12 in use. Said pivotal connections between the connecting rods 44 ,45 on the one hand and the coupling rod 29 and swivel arms 35, 36 on the other can comprise universal couplings, enabling a certain rotation in all directions, but for this, various alternative solutions are known and commercially available.

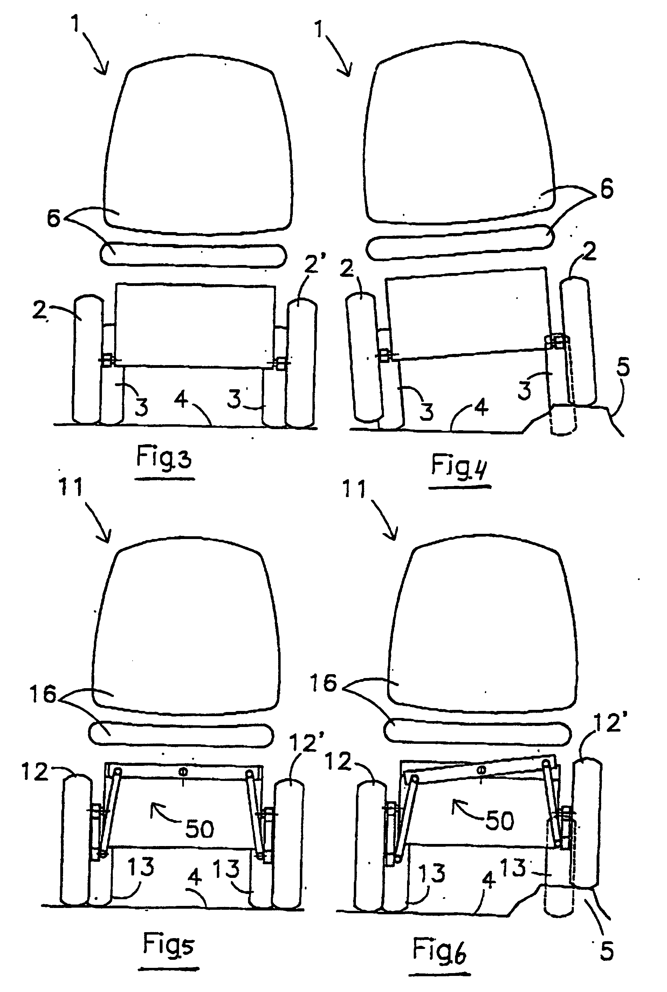

The operation of a wheelchair 11 having an undercarriage 50 according to the invention will be clarified with reference to Figures 3-6, compared with the use of a wheelchair 1 without such undercarriage. For the sake of maneuverability, the driven wheels 2, 12 are the front wheels and the swivel wheels 13 are the rear wheels. In use, the wheelchair 1, 11 is moved over a ground 4 by said drive of the wheelchair 1, 11. When the ground 4 is relatively flat, the driven wheels 12 will usually have no problem in keeping traction. This situation is shown in Figs. 3 and 5, representing the wheelchair 1 according to the prior art and the wheelchair 11 according to the invention respectively. The axes of rotation of the two driven wheels 2, 12 of each of these wheelchairs 1, 11 are at the same level. As shown in Fig. 5, in this situation, the coupling rod 29 of the undercarriage 50 of the wheelchair 11 is in its starting position, which is also shown in Fig. 1.

The wheelchair 1 according to the prior art is not provided with any form of mechanism for variable wheel suspension. Fig. 4 shows the situation where a driven wheel 2' of this wheelchair 1 runs over an unevenness 5 of the ground 4. As shown, this involves the other driven wheel 2 coming off the ground 4 and thus losing grip and traction. Because the wheel 2' does have sufficient traction, the wheelchair 1 starts to make a bend. A control of the drive of the wheels 2, 2' will try to compensate the lack of resistance, as a result of which the wheel that freely suspends in the air starts to rotate faster. As soon as this wheel touches the ground again, that side of the wheelchair will shoot forwards. This results in an impossible, highly uncomfortable travel performance. Moreover, Fig. 4 shows that the position of a seat 6 of the wheelchair 1 is no longer horizontal, so that the center of gravity of the wheelchair 1 with user can be such that it causes the risk of the wheelchair 1 falling over.

Fig. 6 shows the wheelchair 11 with the undercarriage 50, with a driven wheel 12' being located on an unevenness 5 of the ground 4. This situation is also shown in Fig. 2, where the coupling rod 29 has rotated from the starting position, relative to the frame 30 of the undercarriage 50. In this case, the two driven wheels 12, 12' maintain their contact with the ground 4, and a seat 16 of the wheelchair 11 does not tilt sidewards relative to the direction of travel of the wheelchair 11. The swivel wheels 13 maintain their vertical position relative to the frame 30 of the undercarriage 50. In this manner, the wheelchair 11 remains very stable while it maintains traction, and hence it has a very comfortable travel performance, without starting to make any unexpected bends. After all, the driven wheels 12 maintain their grip of the ground.

It is readily understood that the invention is not limited to the exemplary embodiment described, but that various modifications are possible within the framework of the invention.

## Claims

1. An undercarriage for a vehicle, in particular a wheelchair, comprising only two opposite swivel wheels (13) and two opposite driven wheels (12), the driven wheels (12) each being connected to a mechanism of such design that an upward or downward movement of one driven wheel (12) relative to the undercarriage frame (30) effects an opposite movement of the other driven wheel (12'), **characterized in that** for ensuring the stability and the traction of the vehicle on different types of ground, each swivel wheel (13) is pivotable only around a substantially vertical axis and is otherwise fixedly connected to an undercarriage frame (30) of the undercarriage (50).

2. An undercarriage according to claim 1, **characterized in that** the mechanism comprises at least a coupling rod (29) which is at least centrally connected to the undercarriage frame (30) such that the coupling rod (29) is pivotable in a vertical plane relative to the undercarriage frame (30), the coupling rod (29) being arranged for converting a vertically directed movement of one driven wheel (12) into the opposite movement of the other driven wheel (12').

3. An undercarriage according to claim 2, **characterized in that** the undercarriage frame (30) comprises an at least partially open section (27) arranged for enclosing at least a part of the coupling rod (29) such that the coupling rod (29) can perform a pivotal movement in said vertical plane.

4. An undercarriage according to claim 2 or 3, **characterized in that** between each driven wheel (12) and the coupling rod (29), there extends a connecting element (44, 45) arranged for keeping an axis of rotation of the wheel (12) at a vertical distance from the coupling rod (29).

5. An undercarriage according to claim 4, **characterized in that** the connecting elements (44, 45) are connected to or at least adjacent ends (42, 43) of the coupling rod (29).

6. An undercarriage according to claim 4 or 5, **characterized in that** each connecting element (44, 45) is pivotally connected to the coupling rod (29), each connecting element (44, 45) having a part remote from the coupling rod (29) pivotally coupled to the undercarriage frame (30) by a swivel arm (35, 36) pivotable in a vertical plane, said swivel arm (35, 36) having its first end pivotally connected to the connecting element (44, 45) and its second end pivotally connected to the undercarriage frame (30).

7. An undercarriage according to claim 6, **characterized in that** each swivel arm (35, 36) has its second end pivotally connected to a part of the undercarriage (30) remote from the driven wheels (12).

8. An undercarriage according to any one of the preceding claims, **characterized in that** for each driven wheel (12), a drive is mounted on the mechanism.

9. An undercarriage according to claim 8 in combination with claim 6 or 7, **characterized in that** each swivel arm (35, 36) mounts a drive for a driven wheel (12).

10. An undercarriage according to any one of the preceding claims, **characterized in that** the undercarriage (50) comprises spring and damping means arranged for damping vertical movements of the driven wheels (12) relative to the undercarriage frame (30).

11. An undercarriage according to claim 10 in combination with at least claim 2, **characterized in that** the spring and damping means are arranged for damping a pivotal movement of the coupling rod (29).

12. An undercarriage according to claim 10 and any one of claims 4-7, **characterized in that** the connecting elements (44, 45) comprise the spring and damping means, designed as hydraulic or pneumatic spring dampers.

13. An undercarriage according to any one of claims 10-12, **characterized in that** spring forces exerted by the spring and damping means are settable for compensating differences in load on the undercarriage.

14. An undercarriage according to any one of the preceding claims, **characterized in that** the undercarriage frame (30) comprises swivel wheel arms (23) which retain the swivel wheels (13) such that each swivel wheel is pivotable only around a substantially vertical axis.

15. A wheelchair comprising an undercarriage according to any one of the preceding claims.

16. A wheelchair according to claim 15, **characterized by** a seat mounted on the undercarriage, the seat being mounted on the undercarriage such that the driven wheels are the front wheels and the swivel wheels are the rear wheels.

## Patentansprüche

1. Untergestell für ein Fahrzeug, insbesondere einen Rollstuhl, nur zwei einander gegenüberliegende Schwenkräder (13) und zwei einander gegenüberliegende getriebene Räder (12) umfassend, wobei jedes der getriebenen Räder (12) mit einem Mechanismus verbunden ist, der so ausgelegt ist, dass eine Aufwärts- oder Abwärtsbewegung des einen getriebenen Rades (12) bezüglich des Untergestellrahmens (30) zu einer entgegengesetzten Bewegung des anderen getriebenen Rades (12') führt, **dadurch gekennzeichnet, dass** jedes Schwenkrad (13) nur um eine im Wesentlichen senkrechte Achse schwenkbar ist und im Übrigen fest mit einem Untergestellrahmen (30) des Untergestells (50) verbunden ist, um die Stabilität und Bodenhaftung des Fahrzeugs auf verschiedenen Geländetypen sicherzustellen.

2. Untergestell nach Anspruch 1, **dadurch gekennzeichnet, dass** der Mechanismus zumindest eine Kupplungsstange (29) umfasst, die zumindest in der Mitte so mit dem Untergestellrahmen (30) verbunden ist, dass die Kupplungsstange (29) in einer zum Untergestellrahmen (30) senkrechten Ebene schwenkbar ist, wobei die Kupplungsstange (29) so angeordnet ist, dass eine vertikal gerichtete Bewegung des einen getriebenen Rades (12) in die entgegengesetzte Bewegung des anderen getriebenen Rades (12') umgesetzt wird.

3. Untergestell nach Anspruch 2, **dadurch gekennzeichnet, dass** der Untergestellrahmen (30) zumindest einen teilweise offenen Abschnitt (27) umfasst, der so ausgelegt ist, dass er zumindest einen Teil der Kupplungsstange (29) so umschliesst, dass die Kupplungsstange (29) eine schwenkende Bewegung in dieser senkrechten Ebene ausführen kann.

4. Untergestell nach Anspruch 2 oder 3, **dadurch gekennzeichnet, dass** sich zwischen jedem der angetriebenen Räder (12) und der Kupplungsstange (29) ein Verbindungselement (44, 45) erstreckt, das so ausgelegt ist, dass eine Drehachse des Rades (12) in einem senkrechten Abstand von der Kupplungsstange (29) gehalten wird.

5. Untergestell nach Anspruch 4, **dadurch gekennzeichnet, dass** die Verbindungselemente (44, 45) mit Enden (42, 43) der Kupplungsstange (29) verbunden oder zumindest angrenzend sind.

6. Untergestell nach Anspruch 4 oder 5, **dadurch gekennzeichnet, dass** jedes der Verbindungselemente (44, 45) schwenkend mit der Kupplungsstange (29) verbunden ist, wobei jedes der Verbindungselemente (44, 45) einen von der Kupplungsstange (29) entfernten Teil besitzt, der schwenkend mit dem Untergestellrahmen (30) durch einen Schwenkarm (35, 36), der in einer senkrechten Ebenen schwenkbar ist, gekoppelt ist, wobei das erste Ende dieses Schwenkarms (35, 36) schwenkend mit dem Verbindungselement (44, 45) verbunden ist und sein zweites Ende schwenkend mit dem Untergestellrahmen (30) verbunden ist.

7. Untergestell nach Anspruch 6, **dadurch gekennzeichnet, dass** das zweite Ende jedes Schwenkarms (35, 36) schwenkend mit einem Teil des Untergestells (30) verbunden ist, der sich von den getriebenen Rädern (12) entfernt befindet.

8. Untergestell nach einem beliebigen der vorangehenden Ansprüche, **dadurch gekennzeichnet, dass** für jedes der getriebenen Räder (12) ein Antrieb auf den Mechanismus montiert ist.

9. Untergestell nach Anspruch 8 in Verbindung mit Anspruch 6 oder 7, **dadurch gekennzeichnet, dass** auf jeden der Schwenkarme (35, 36) ein Antrieb für ein getriebenes Rad (12) montiert ist.

10. Untergestell nach einem beliebigen der vorangehenden Ansprüche, **dadurch gekennzeichnet, dass** das Untergestell (50) Feder- und Dämpfungsorgane umfasst, die so angeordnet sind, dass sie vertikale Bewegungen der getriebenen Räder (12) bezüglich des Untergestellrahmens (30) dämpfen.

11. Untergestell nach Anspruch 10 in Verbindung mit zumindest dem Anspruch 2, **dadurch gekennzeichnet, dass** die Feder- und Dämpfungsorgane so angeordnet sind, dass sie eine schwenkende Bewegung der Kupplungsstange (29) dämpfen.

12. Untergestell nach Anspruch 10 und einem beliebigen der Ansprüche 4 bis 7, **dadurch gekennzeichnet, dass** die Verbindungselemente (44, 45) die Feder- und Dämpfungsorgane umfassen, die als hydraulische oder pneumatische Federdämpfer ausgelegt sind.

13. Untergestell nach einem beliebigen der Ansprüche 10 bis 12, **dadurch gekennzeichnet, dass** die durch die Feder- und Dämpfungsorgane ausgeübten Federkräfte zum Ausgleichen von Unterschieden in der Belastung des Untergestells einstellbar sind.

14. Untergestell nach einem beliebigen der vorangehenden Ansprüche, **dadurch gekennzeichnet, dass** der Untergestellrahmen (30) Schwenkradarme (23) umfasst, die die Schwenkräder (13) so halten, dass jedes der Schwenkräder nur um eine im Wesentlichen senkrechte Achse schwenkbar ist.

15. Rollstuhl mit einem Untergestell nach einem beliebigen der vorangehenden Ansprüche.

16. Rollstuhl nach Anspruch 15, **gekennzeichnet durch** einen Sitz, der auf das Untergestell montiert ist, wobei der Sitz so auf das Untergestell montiert ist, dass die getriebenen Räder die Vorderräder und die Schwenkräder die Hinterräder sind.

## Revendications

1. Châssis destiné à un véhicule, en particulier un fauteuil roulant comprenant seulement deux roues pivotantes opposées (13) et deux roues motrices opposées (12), chacune des roues motrices (12) étant reliée à un mécanisme d'une conception telle qu'un mouvement vers le haut ou vers le bas d'une roue motrice (12) par rapport au cadre du châssis (30) réalise un mouvement opposé de l'autre roue motrice (12') **caractérisé en ce que** pour assurer la stabilité et la traction du véhicule sur des types de sols différents, chaque roue pivotante (13) peut pivoter uniquement autour d'un axe sensiblement vertical et est par ailleurs reliée de façon fixe à un cadre de châssis (30) du châssis (50).

2. Châssis selon la revendication 1, **caractérisé en ce que** le mécanisme comprend au moins une barre d'accouplement (29) qui est reliée au moins de façon centrale au cadre du châssis (30), de sorte que la barre d'accouplement (29) peut pivoter dans un plan vertical par rapport au cadre du châssis (30), la barre d'accouplement (29), étant agencée pour convertir un mouvement orienté verticalement d'une roue motrice (12) en le mouvement opposé à celui de l'autre roue motrice (12').

3. Châssis selon la revendication 2, **caractérisé en ce que** le cadre du châssis (30) comprend une section au moins partiellement ouverte (27) agencée pour entourer au moins une partie de la barre d'accouplement (29) de sorte que la barre d'accouplement (29) peut exécuter un mouvement de pivotement dans ledit plan vertical.

4. Châssis selon la revendication 2 ou 3, **caractérisé en ce qu'**entre chaque roue motrice (12) et la barre d'accouplement (29), s'étend un élément de liaison (44, 45) agencé pour maintenir un axe de rotation de la roue (12) à une distance verticale par rapport à la barre d'accouplement (29).

5. Châssis selon la revendication 4, **caractérisé en ce que** les éléments de liaison (44, 45) sont reliés aux extrémités ou au moins aux extrémités adjacentes (42, 43) de la barre d'accouplement (29).

6. Châssis selon la revendication 4 ou 5, **caractérisé en ce que** chaque élément de liaison (44, 45) est relié avec possibilité de pivotement à la barre d'accouplement (29), chaque élément de liaison (44, 45) comportant une partie distante de la barre d'accouplement (29) reliée avec possibilité de pivotement au cadre du châssis (90) par un bras oscillant (35, 36) pouvant pivoter dans un plan vertical, ledit bras oscillant (35, 36) ayant sa première extrémité reliée avec possibilité de pivotement à l'élément de liaison (44, 45) et sa seconde extrémité reliée avec possibilité de pivotement au cadre du châssis (30).

7. Châssis selon la revendication 6, **caractérisé en ce que** la seconde extrémité de chaque bras oscillant (35, 36) est reliée avec possibilité de pivotement à une partie du châssis (30) distante des roues motrices (12).

8. Châssis selon l'une quelconque des revendications précédentes, **caractérisé en ce que** pour chaque roue motrice (12), un entraînement est monté sur le mécanisme.

9. Châssis selon la revendication 8, en combinaison avec la revendication 6 ou 7, **caractérisé en ce que** chaque bras oscillant (35, 36) sert de monture à un entraînement pour une roue motrice (12).

10. Châssis selon l'une quelconque des revendications précédentes, **caractérisé en ce que** le châssis (50) comprend des moyens élastique et d'amortissement agencés pour amortir les mouvements verticaux des roues motrices (12) par rapport au cadre du châssis (30).

11. Châssis selon la revendication 10, en combinaison avec au moins la revendication 2, **caractérisé en ce que** les moyens élastique et d'amortissement sont agencés pour amortir un mouvement de pivotement de la barre d'accouplement (29).

12. Châssis selon la revendication 10 et selon l'une quelconque des revendications 4 à 7, **caractérisé en ce que** les éléments de liaison (44, 45) comprennent les moyens élastique et d'amortissement, conçus sous forme d'amortisseurs élastiques hydrauliques ou pneumatiques.

13. Châssis selon l'une quelconque des revendications 10 à 12, **caractérisé en ce que** les forces élastiques exercées par les moyens élastique et d'amortissement peuvent être réglés pour compenser des différences de charge sur le châssis.

14. Châssis selon l'une quelconque des revendications précédentes, **caractérisé en ce que** le cadre du châssis (30) comprend des bras de roues pivotantes (23) qui retiennent les roues pivotantes (13) de manière à ce que chaque roue pivotante puisse pivoter uniquement autour d'un axe sensiblement vertical.

15. Fauteuil roulant comprenant un châssis selon l'une quelconque des revendications précédentes.

16. Fauteuil roulant selon la revendication 15, **caractérisé par** un siège monté sur le châssis, le siège étant monté sur le châssis, de telle manière que les roues motrices soient les roues avant et que les roues pivotantes soient les roues arrière.
